**Europäisches Patentamt**

**European Patent Office**

**Office européen des brevets**

(19)

(11) Numéro de publication: **0 107 593**
**B1**

(12) ## FASCICULE DE BREVET EUROPEEN

(45) Date de publication du fascicule du brevet:
07.01.87

(51) Int. Cl.⁴: **G 01 N 11/10**

(21) Numéro de dépôt: **83402065.3**

(22) Date de dépôt: **24.10.83**

(54) **Appareil de mesure des propriétés rhéologiques de corps semi-solides par cisaillement harmonique en rotation.**

(30) Priorité: **25.10.82 FR 8217835**

(43) Date de publication de la demande:
**02.05.84 Bulletin 84/18**

(45) Mention de la délivrance du brevet:
**07.01.87 Bulletin 87/2**

(84) Etats contractants désignés:
**DE GB IT NL**

(56) Documents cités:
**GB - A - 2 028 516**
**US - A - 3 400 595**
**US - A - 4 154 093**

**JOURNAL OF SCIENTIFIC INSTRUMENTS, vol. 42, no. 8,**
**août 1965, pages 569-575, Londres, GB**
**E. W. BILLINGTON: "Coaxial cylinder viscometer for**
*use under oscillatory and transient conditions"*

(73) Titulaire: **INSTITUT NATIONAL DE LA RECHERCHE**
**AGRONOMIQUE (INRA), 149, rue de Grenelle,**
**F-75341 Paris Cedex 07 (FR)**

(72) Inventeur: **Gervais, Alain, 52, route de Saclay Vauhallan,**
**F-91430 Igny (FR)**
Inventeur: **Vermeire, Daniel, Avenue Jean Jaurès,**
**F-78350 Jouy en Josas (FR)**
Inventeur: **Cerf, Olivier, 314, rue Saint Jacques,**
**F-75005 Paris (FR)**
Inventeur: **Toux, Jean, 16, rue Francis Voveile,**
**F-28000 Chartres (FR)**

(74) Mandataire: **Phélip, Bruno et al, c/o Cabinet Harié &**
**Phélip 21, rue de la Rochefoucauld, F-75009 Paris (FR)**

## Description

La présente invention concerne un appareil de mesure des propriétés rhéologiques de corps semi-solides par cisaillement harmonique en rotation. Ledit appareil peut être dénommé viscoélasticimètre.

L'invention permet l'étude tant des propriétés rhéologiques simples (viscosité, élasticité) que celle des propriétés rhéologiques complexes (viscoélasticité, plasticité, viscoplasticité, etc.) pour de nombreuses substances ou corps semi-solides.

Les applications de la présente invention sont très nombreuses.

Des exemples de produits semi-solides sont représentés par des produits sous forme de gels et de crèmes. On mentionnera en particulier les gels de gélatine, d'amidon, de lait, les crèmes glacées, la guimauve, la confiture, les crèmes chocolatées, le miel, la crème de lait et autres produits alimentaires, ainsi que le sang coagulé et substances semi-solides analogues.

La présente invention trouve également une application dans l'industrie des matières plastiques, du caoutchouc, des cires et des produits pétroliers.

D'une façon générale l'invention s'applique à tous les corps semi-solides. Toutefois elle trouve une application particulière dans l'industrie fromagère pour le choix du moment du découpage du coagulum ou caillé de fromagerie.

L'invention met en œuvre un cisaillement harmonique de rotation et permet de quantifier avec précision les grandeurs physiques recherchées dans les unités du système international.

Du fait des faibles cisaillements provoqués dans le produit, on ne détruit pas la structure du produit et on peut suivre l'évolution de ces caractéristiques rhéologiques au cours du temps.

L'appareil est entièrement automatique et il peut être utilisé aussi bien au laboratoire que dans les chaînes de contrôle et de fabrication industrielles.

On sait que la rhéologie est une partie de la technique concernant l'étude des relations entre les contraintes et les déformations.

Le but de la présente invention est la réalisation d'un appareil de mesure d'une conception à la fois simple, efficace, fiable, permettant de créer une déformation dans un produit semi-solide par l'intermediaire d'une tête de mesure oscillant autour de son axe vertical et animée d'un mouvement sinusoïdal ou pseudo sinusoïdal de rotation, d'amplitude et de fréquence réglables, la mesure du couple créé dans le produit autour de la tête étant effectuée par un capteur de couple monté sur l'axe.

Pour autant qu'on le sache, on ne connaît pas à l'heure actuelle d'appareil de mesure des propriétés rhéologiques de corps semi-solides dans lequel l'axe portant la tête de mesure est animé d'un mouvement de rotation parfaitement sinusoïdal.

Dans l'art antérieur on utilise un appareil spécifique pour le lait, connu sous le nom de Torsiometer, commercialisé par la Société Plint and Partners dans lequel l'amplitude et la fréquence d'oscillation au cylindre sont fixes. Cet appareil est manuel et son système de mesure du couple ne peut pas donner des unités du système international.

Un tel appareil ne peut travailler qu'en entrefer large (l'entrefer étant la distance entre la tête de mesure et la paroi de la cuve) et son mouvement n'est pas constant au cours de la gélification du lait.

L'appareil selon l'invention est entièrement automatique et peut travailler soit en entrefer étroit soit en entrefer large.

GB-A-2028516 décrit un appareil de mesure des propriétés rhéologiques des substances semi-solides comprenant essentiellement une cuve contenant une substance à éprouver, une tête de mesure plongée dans la cuve au sein de la substance, des moyens d'entraînement pour entraîner en mouvement alternatif sinusoïdal de rotation la cuve autour de son axe, un capteur de couple connecté à la tête de meure et un capteur angulaire.

US-A-4154093 décrit un appareil pour mesurer les caractéristiques viscoélastiques d'un échantillon contenu dans une cuve dans lequel tant la cuve que l'échantillon sont soumis à une oscillation de torsion autour d'un axe vertical par une source d'oscillations par l'intermédiaire d'un élément de couplage élastique, la source d'oscillations agissant soit à une fréquence fixe prédéterminée soit à la fréquence de résonance de la cuve et de l'échantillon.

L'invention a pour objet un appareil de mesure des propriétés rhéologiques de corps semi-solides, comprenant essentiellement une cuve contenant le corps à éprouver, une tête de mesure plongée dans la cuve au sein du corps, des moyens pour entraîner en rotation ladite tête par l'intermédiaire d'un axe, des moyens pour animer l'axe d'un mouvement sinusoïdal ou pseudo-sinusoïdal de rotation, et un capteur angulaire monté sur l'axe, caractérisé en ce qu'il comporte en outre un capteur de couple monté sur l'axe, le capteur de couple et le capteur angulaire étant reliés tous deux à des moyens de traitement des informations, tels qu'un dispositif de conditionnement de signaux connecté à un microordinateur et en ce que le capteur de couple est une pièce métallique évidée pourvue d'une pluralité de perforations et comportant au moins deux branches ou toiles sur lesquelles sont collées des jauges de contrainte, ladite pièce métallique étant déformable au niveau des toiles.

L'appareil de mesure selon la présente invention mettent en œuvre un cisaillement harmonique de rotation au sein de corps semi-solide à mesurer.

Des modes de réalisation particuliers de l'invention comportent les caractéristiques ci-après, considérées isolément ou selon toutes leurs combinaisons techniquement possibles:

les jauges de contrainte sont des jauges de contrainte résistives ou capacitives dont le branchement est effectué en pont, notamment en pont de Wheatstone afin que chaque branche de pont renferme la série des jauges correspondant au même endroit sur les branches du capteur;

l'amplitude de la rotation de la tête de mesure animée d'un mouvement sinusoïdal ou pseudo-sinusoïdal se situe dans la gamme de 0 à ± 90°, notamment de 0 à ± 20° et la gamme de fréquence est comprise entre 1 millihertz et 10 hertz notamment entre 1 mHz et 1Hz;

la tête de mesure est sous la forme d'un cylindre, d'un cône ou d'une pièce plane;

les moyens, pour animer l'axe, portant la tête de mesure plongeant dans les corps semi-solides à éprouver, d'un mouvement sinusoïdal de rotation constituent une chaîne cinématique comprenant un disque entraîné par un moteur, en rotation continue un roulement fixé sur le disque et tournant autour d'un axe parallèle à l'axe de rotation du disque, une platine, un chariot supporté par ladite platine, un élément solidaire du chariot, cet élément comportant un crémaillère rectiligne et un côté rectiligne sur lequel s'appuie le roulement, grâce à un ressort et un secteur denté en prise avec ladite crémaillère, l'axe de ce secteur étant l'axe portant la tête de mesure;

les moyens pour animer l'axe d'un mouvement sinusoïdal de rotation sont constitués par un moteur entraîné en rotation continue et actionnant une autre chaîne cinématique comprenant une table à double mouvement rectiligne croisé comportant deux parties mobiles et une partie fixe, une des deux parties mobiles portant une crémaillère rectiligne un secteur denté étant en prise avec ladite crémaillère, l'axe de ce secteur étant l'axe portant la tête de mesure;

les moyens pour animer l'axe portant la tête de mesure d'un mouvement pseudo-sinusoïdal comprennent un premier et un deuxième disques, le premier disque entraîné en rotation continue par un moteur et muni d'un point de fixation d'un fil ou ruban qui est accroché en un point de fixation sur le deuxième disque lequel comporte un ressort de tension, l'axe du deuxième disque étant l'axe portant la tête de mesure,

lesdits moyens sont constitués par un moteur-couple et une électronique de commande,

lesdits moyens sont constitués par un dispositif à friction.

D'autres avantages et caractéristiques de la présente invention ressortiront également de la description détaillée ci-après faite en regard des dessins annexés sur lesquels:

fig. 1 est un schéma synoptique illustrant l'invention;

fig. 2 illustre un exemple concret de certains éléments de la fig. 1;

fig. 3 est une vue en perspective des moyens pour obtenir un mouvement sinusoïdal de rotation;

fig. 4 est une variante de la fig. 3;

fig. 5 illustre un exemple très simple de transformation d'un mouvement alternatif rectiligne en mouvement sinusoïdal de rotation à l'aide de deux secteurs dentés superposés attaquant une crémaillère rectiligne et reliés entre eux par le ressort figuré schématiquement;

fig. 6 représente une version simplifiée avec laquelle le mouvement obtenu est un mouvement pseudo-sinusoïdal;

fig. 7 représente le capteur de couple selon l'invention;

fig. 8 est une vue agrandie d'une branche ou toile sur laquelle sont collées des jauges de contrainte;

fig. 9 montre la déformée en S obtenue au niveau d'une toile;

fig. 10 montre trois types differents de tête de mesure.

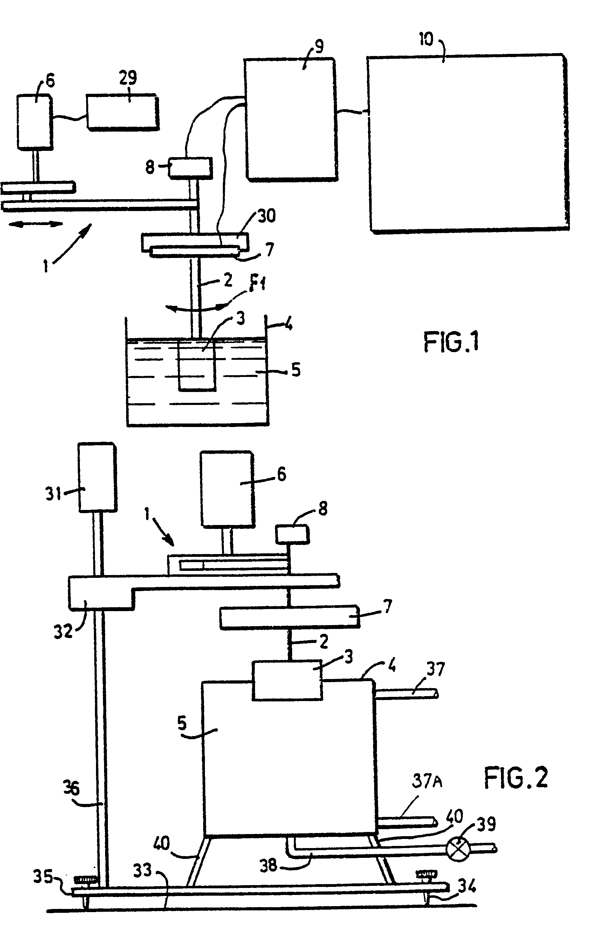

Aux dessins annexés où les mêmes symboles de référence désignent des parties analogues, la fig. 1 est un schéma synoptique qui illustre la présente invention.

A partir d'un moteur 6 commandé par une électronique 29, on transforme un mouvement circulaire continu en un mouvement alternatif rectiligne puis en un mouvement sinusoïdal de rotation d'un axe 2, par des moyens 1 décrits de façon plus détaillée ci-après. L'axe 2 qui est animé d'un tel mouvement selon la flèche $F_1$ sur la fig. 1 porte en bout une tête de mesure 3 plongeant dans le produit semi-solide 5 à éprouver disposé dans une cuve 4. L'axe 2 porte également un capteur de couple 7 et sa monture de fixation 30 ainsi qu'un capteur de couple 7 et sa monture de fixation 30 ainsi qu'un capteur angulaire 8, tous deux reliés à un dispositif de conditionnement de signaux 9, connecté à un micro-ordinateur 10. Le moteur 6 pourrait d'ailleurs être commandé directement par le dispositif 9.

Le dispositif 9 permet l'alimentation électrique des différents éléments, le conditionnement des signaux et leur affichage, le réglage en fréquence de l'appareil, le renvoi des signaux soit sous forme analogique soit sous forme numérique. On peut donc effectuer à partir du dispositif 9 le pilotage de la vitesse de rotation au moteur 6 par l'intermédiaire d'une tension stabilisée réglable (moteur asservi) ou d'une base de fréquence stabilisée réglable (moteur pas à pas).

La fig. 2 montre un exemple de mise en œuvre. L'appareil de l'invention est disposé sur une table 33. Un piétement 35 réglable pour l'horizontalité prend appui sur la table 33 et peut être réglé par des vis 34. Une colonne verticale 36 porte un moteur 31 de montée et de descente d'une platine 32 supportant les moyens 1 de transformation du mouvement circulaire continu imprimé par le moteur 6. Le capteur de couple 7 et le capteur angulaire 8 sont montés sur l'axe 2 en bout duquel la tête de mesure 3 plonge dans la cuve 4 remplie de produit semi-solide 5 à éprouver. La cuve 4 est une cuve thermostatée par circulation d'un liquide dans une double enveloppe. On a illustré schématiquement par 37 et 37 A la circulation du liquide. La cuve 4 repose sur le piétement réglable 35 au moyen de pieds 40. Une conduite de vidange 38 de la cuve 5 comporte une vanne d'arrêt 39.

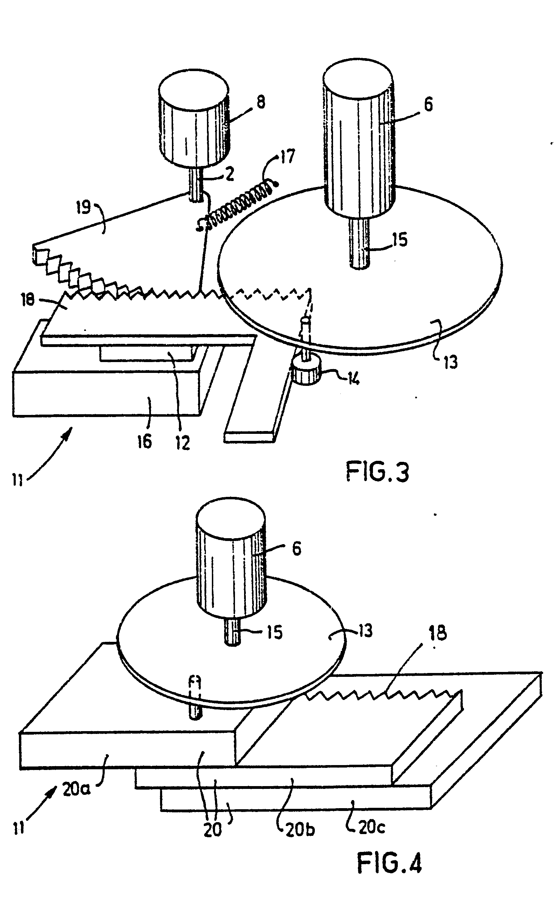

La fig. 3 illustre un mode de réalisation pour obtenir un mouvement sinusoïdal de rotation.

Dans l'exemple considéré, le moteur 6 imprime par l'intermédiaire de l'axe 15 un mouvement circulaire continu à un disque 13. Ce mouvement circulaire continu est d'abord transformé sur le chariot 12, qui est un élément de la chaîne cinématique 11 en un mouvement sinusoïdal rectiligne. Cette transformation est effectuée par l'intermédiaire d'un roulement 14 fixé à une distance réglable de l'axe de rotation 15 du moteur 6 et qui prend appui sur un élément 18 à débattement rectiligne. La platine 16 supporte la chariot 12. L'appui nécessaire du roulement 14 sur la platine 16 est assuré par un ressort 17. Dans ce mode de réalisation le roulement 14 doit toujours prendre appui sur la platine 16. Le chariot 12 sur lequel est créé un mouvement sinusoïdal rectiligne porte une crémaillère 18 laquelle est en prise avec un secteur denté ou pignon 19 à auto-rattrapage de jeux. L'ensemble crémaillère 18 – pignon 19 transforme le mouvement rectiligne sinusoïdal en un mouvement sinusoïdal de rotation, lequel mouvement est imprimé sur l'axe 2 sur lequel sont disposés tant le capteur angulaire 8 que le capteur de couple 7 non représenté sur la fig. 3.

La fig. 4 montre un autre exemple de réalisation de la chaîne cinématique 11.

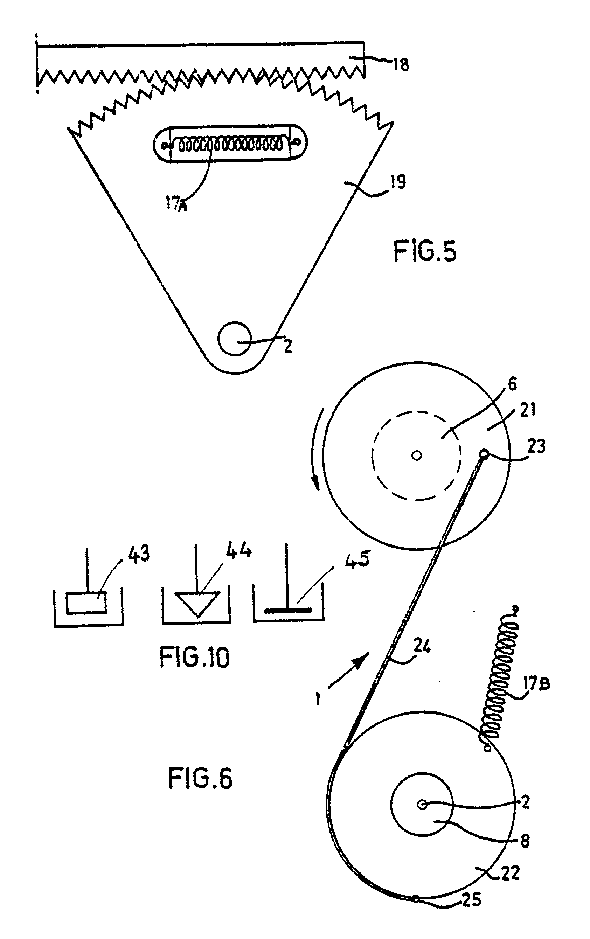

Dans cette variante on prévoit pour la transformation du mouvement imprimé par le moteur 6 une table ou platine 20 à double mouvement rectiligne croisé comportant deux parties mobiles 20a et 20b et une partie fixe 20c. La partie mobile 20b porte la crémaillère 18 et le mouvement est transformé à l'aide du secteur denté 19 sur l'axe 2 comme indiqué schématiquement sur la fig. 5.

Ce mode de mise en œuvre avec la table 20 à double mouvement rectiligne croisé ne nécessite pas l'emploi du ressort 17 utilisé dans le mode de réalisation selon la fig. 3. En effet dans cette réalisation il n'y a pas d'élément 18 à solidariser avec le roulement 14. La transformation du mouvement s'effectue par la table ou platine 20. Dans cette réalisation on utilise le système de transformation du mouvement représenté sur la fig. 5. Sur cette figure on conçoit qu'on peut voir qu'un seul des deux secteurs dentés superposés, toutefois on peut utiliser un système analogue constitué par deux crémaillères liées entre elles par un ressort 17A et attaquant un seul secteur denté 19.

La fig. 6 se rapporte à une réalisation très simplifiée et d'un prix de revient avantageux.

A partir du moteur 6 présentant les mêmes caractéristiques que celles mentionnées ci-dessus, on crée un mouvement pseudo-sinusoïdal de rotation. Cette transformation est obtenue au moyen de deux disques ou roues 21 et 22 reliés par un fil ou ruban 24. Le fil ou ruban 24 est accroché en un point de fixation 23 sur le disque 21 qui est animé d'un mouvement circulaire continu selon le sens de la flèche à l'aide du moteur 6.

Le mouvement est transformé par le fil ou ruban 24 accroché sur le disque ou roue 22 au point 25 lequel disque comporte un ressort de tension 17B.

On comprend aisément que si la longueur du fil ou ruban 24 était infinie, on obtiendrait un mouvement sinusoïdal de rotation sur l'axe 2.

Toutefois dans la réalité, le fil ou ruban 24 n'est pas infini et on obtient donc dans ce cas un mouvement pseudo-sinusoïdal de rotation. Néanmoins pour certaines déterminations, du fait de la simplicité de la réalisation, ce mode de réalisation est très avantageux.

Comme on l'a mentionné plus haut les moyens 1 de transformation de mouvement peuvent être de type mécanique – c'est le cas des deux chaînes cinématiques 11 et du mode simplifié selon la fig. 6 – ou de type électronique avec un moteur-couple et une électronique de commande.

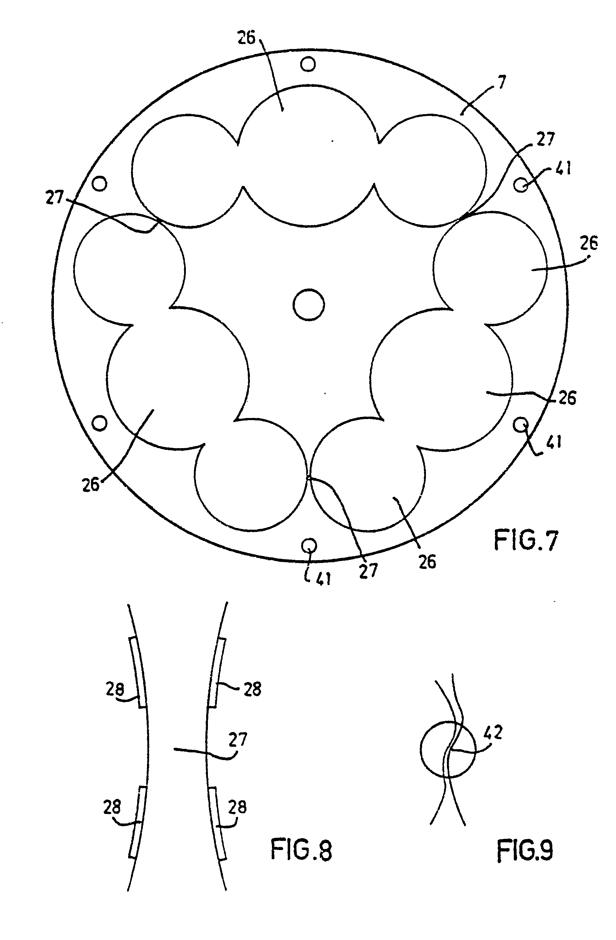

La fig. 7 montre le capteur de couple disposé sur l'axe 2. La bride de fixation ou monture 30 illustrée schématiquement sur la fig. 1 assure le montage dudit capteur de couple 7.

Le capteur de couple 7 se présente sous la forme d'une pièce de métal, de préférence de forme circulaire, pourvue d'une pluralité de perforations 26 de manière à former des branches ou toiles 27 amincies par exemple jusqu'à une dimension de 0,1 mm. Les branches ou toiles 27 vont servir à effectuer les déterminations désirées. Le capteur de couple 7 comporte au moins deux branches ou toiles 27. Les toiles 27 résultent de l'implantation géométrique des perforations 26. Il est bien évident que l'on pourrait procéder en rapportant les toiles 27 à la fois sur une pièce interne et une pièce externe de capteur. Le capteur de couple est très sensible en mesure de couple et est raide dans les autres directions, autrement dit en poussée ou en traction. Sur la fig. 7 on a représenté trois branches, il est bien entendu qu'il s'agit d'un exemple et que le nombre supérieur à deux branches n'est pas limitatif. 41 désigne des trous au moyen desquels le capteur de couple 7 est assujetti, par exemple, à l'aide de vis, à la monture de fixation ou bride 30. Le capteur de couple 7 est réalisé en alliage de bonne qualité métrologique, plus particulièrement en ce qui concerne sa linéarité élastique, son hystérésis et son retour à zéro. Sur chaque branche ou toile 27 on colle des jauges de contrainte 28 qui peuvent être de type capacitif, résistif ou autres. Dans l'exemple représenté sur la fig. 8, on a collé quatre jauges 28 sur une branche 27. De préférence le branchement des jauges 28 est effectué en pont, notamment en pont de Wheatstone, de façon à ce que chaque branche de pont contienne la série des jauges correspondant au même endroit sur les branches du capteur. De cette façon on élimine les variabilités d'épaisseur des branches du capteur.

La fig. 9 montre en 42 la déformée en S obtenue lors d'une mesure.

Le conditionnement du pont de jauges 28 est réalisé par le dispositif 9 qui assure une alimentation stabilisée réglable.

A titre d'exemple on peut prévoir une alimentation jusqu'à 6 volts par branche 27 de capteur 7 pour des jauges résistives de 350 ohms.

Le capteur angulaire 8 est un capteur classique, en conséquence il ne sera pas décrit davantage car l'homme de l'art connaît bien un tel dispositif.

Le dispositif 9 outre les fonctions décrites ci-dessus permet l'équilibrage du pont de jauges 28, l'amplification du signal et le filtrage.

Il permet également l'alimentation stabilisée du capteur angulaire 8, l'affichage de toutes les tensions mesurées et l'affichage des contraintes.

Il comporte des sorties analogiques correspondant aux tensions mesurées. Il peut recevoir une interface numérique assurant le pilotage et la récupération des données à partir d'un calculateur.

Les têtes de mesure 3 peuvent présenter différentes formes, il peut s'agir par exemple d'un cylindre 43, d'un cône 44 ou d'une pièce plane 45, ou toute autre forme à symétrie de révolution (voir fig. 10).

L'appareil selon la présente invention permet d'effectuer des essais non destructifs. Il permet en outre de connaître l'évolution des propriétés rhéologiques au cours du temps. Une application particulièrement utile de cet appareil concerne l'industrie du fromage.

Dans l'industrie fromagère le choix du découpage du coagulum du caillé de fromagerie est une phase cruciale dans la fabrication des fromages.

Jusqu'à présent on a utilisé des méthodes empiriques comme le toucher ou l'application de facteurs multiplicateurs du temps de prise.

Les méthodes instrumentales semi-empiriques utilisent des appareils comme des pénétromères ou des dispositifs de mesure de la rigidité. Aucun de ces appareils n'est vraiment satisfaisant.

L'appareil selon l'invention présente un caractère universel, selon le choix de la largeur de l'entrefer, il permet de réaliser des mesures de viscosité pure, d'élasticité pure. Dans l'application fromagère, à partir de l'évolution des paramètres rhéologiques mesurés, l'ordinateur 10 choisira le moment optimal pour le découpage, la conduite optimale du découpage, du décaillage et du travail mécanique (brassage) du caillé en cuve.

Il est clair que l'appareil de l'invention est utile dans de nombreuses autres applications par exemple pour le contrôle en ligne de produits pour déterminer les cinétiques de gélification de différents produits.

L'appareil selon l'invention qui est d'une réalisation simple du fait de sa structure procure des résultats qui n'ont jamais pu être obtenus jusqu'à ce jour.

## Revendications

1. Appareil de mesure des propriétés rhéologiques de corps semi-solides comprenant essentiellement une cuve (4) contenant le corps à éprouver (5), une tête de mesure (3) plongée dans la cuve (4) au sein du corps, des moyens pour entraîner en rotation ladite tête (3) par l'intermédiaire d'un axe (2), des moyens (1) pour animer l'axe (2) d'un mouvement sinusoïdal ou pseudo-sinusoïdal de rotation et un capteur angulaire (8) monte sur l'axe (2), caractérisé en ce qu'il comporte en outre un capteur de couple (7) monté sur l'axe (2), le capteur de couple et le capteur angulaire étant reliés tous deux à des moyens de traitement des informations, tels qu'un dispositif de conditionnement de signaux (9) connecté à un micro-ordinateur (10), et en ce que le capteur de couple (7) est une pièce métallique évidée pourvue d'une pluralité de perforations (26) et comportant au moins deux branches ou toiles (27) sur lesquelles sont collées des jauges de contrainte (28), ladite pièce métallique étant déformable au niveau des toiles (27).

2. Appareil selon la revendication 1, caractérisé en ce que les jauges de contrainte (28) sont des jauges de contrainte résistives ou capacitives dont le branchement est effectué en point notamment en pont de Wheatstone afin que chaque branche de pont renferme la série des jauges correspondant au même endroit sur les branches (27) du capteur (7).

3. Appareil selon l'une des revendications 1 ou 2, caractérisé en ce que l'amplitude de la rotation de la tête de mesure (3) animée d'un mouvement sinusoïdal ou pseudo-sinusoïdal se situe dans la gamme de 0 à ± 90°, notamment de 0 à ± 20° et en ce que la gamme de fréquence est comprise entre 1 millihertz et 10 hertz notamment entre 1 mHz et 1 Hz.

4. Appareil selon l'une quelconque des revendications 1 à 3, caractérisé en ce que la tête de mesure (3) est sous forme d'une pièce présentant une symétrie de révolution comme par exemple un cylindre, un cône ou une pièce plane.

5. Appareil selon la revendication 1, caractérisé en ce que les moyens (1) pour animer l'axe (2) d'un mouvement sinusoïdal de rotation constituent une chaîne cinématique (11) comprenant un disque (13) entraîné par un moteur (6) en rotation continue un roulement (14) fixé sur le disque (13) et tournant autour d'un axe parallèle à l'axe de rotation (15) du disque (13), une platine (16), un chariot (12) supporté par ladite platine (16), un élément (18) solidaire du chariot (12), cet élément comportant une crémaillère rectiligne et un côté rectiligne sur lequel s'appuie le roulement (14) grâce à un ressort (17) et un secteur denté (19) en prise avec ladite crémaillère (18), l'axe de ce secteur (19) étant l'axe (2) portant la tête de mesure (3).

6. Appareil selon la revendication 1, caractérisé en ce que les moyens (1) pour animer l'axe (2) d'un mouvement sinusoïdal de rotation sont constitués par un moteur (6) entraîné en rotation continue et actionnant une chaîne cinématique (11) comprenant une table (20) à double mouvement rectiligne croisé comportant deux parties mobiles (20a) et (20b) et une partie fixe (20c), une des deux parties mobiles portant une crémaillère rectiligne (18), un secteur denté (19) étant en prise avec ladite crémaillère (18), l'axe de ce secteur (19) étant l'axe portant la tête de mesure.

7. Appareil selon la revendication 1, caractérisé en ce que les moyens (1) pour animer l'axe (2) portant la tête de mesure (3) d'un mouvement pseudo-sinusoïdal de rotation comprennent un premier et un deuxième disques (21, 22), le premier disque (21) étant entraîné en rotation continue par un moteur (6) et étant muni d'un point de fixation (23) d'un fil ou ruban (24) qui est accroché en un point de fixation (25) sur le deuxième disque (22), lequel comporte un ressort (17B) destiné à maintenir tendu le fil ou ruban (24), l'axe du deuxième disque (22) étant l'axe portant la tête de mesure.

8. Appareil selon la revendication 1, caractérisé en ce que les moyens (1) pour animer l'axe (2) portant la tête de mesure (3) d'un mouvement sinusoïdal de rotation sont constitués par un moteur-couple et une électronique de commande.

9. Application de l'appareil selon l'une quelconque des revendications 1 à 8 dans l'industrie fromagère pour la choix du moment du découpage du coagulum ou caillé de fromagerie.

## Patentansprüche

1. Gerät zum Messen der rheologischen Eigenschaften von halbfesten Körpern, im wesentlichen mit einem Behälter (4) für den zu untersuchenden Körper (5), einem Messkopf (3), der in dem Behälter (4) in den Körper eingetaucht ist, mit einem Drehantrieb für den Messkopf (3) mittels einer Achse (2), mit einem Antrieb (1), mit dem der Achse (2) eine sinusförmige oder pseudo-sinusförmige Drehbewegung aufgezwungen wird, und mit einem Winkelaufnehmer (8), der an der Achse (2) befestigt ist, dadurch gekennzeichnet, dass weiterhin ein Momentenaufnehmer (7) an der Achse (2) befestigt ist, dass beide Aufnehmer (7, 8) mit einer Datenverarbeitungsanlage verbunden sind, beispielsweise mit einem Signalverarbeiter (9), an den ein Mikroprozessor (10) angeschlossen ist, und dass der Momentenaufnehmer (7) als Metallstück mit mehreren Ausnehmungen (26) und mit wenigstens zwei Gewebestücken (27) ausgebildet ist, auf die Spannungsaufnehmer (28) aufgeklebt sind, wobei das Metallstück auf der Höhe der Gewebestücke (27) verformbar ist,

2. Gerät nach Anspruch 1, dadurch gekennzeichnet, dass die Spannungsaufnehmer (28) als ohmische oder kapazitive Aufnehmer ausgebildet sind, die in einer Brückenschaltung miteinander verbunden sind, insbesondere in einer Wheatstoneischen Brückenschaltung, so dass jeder Brückenzweig die Reihenschaltung der Aufnehmer einschliesst, die demselben Ort auf den Zweigen (27) des Aufnehmers (7) entsprechen.

3. Gerät nach Anspruch 1 oder 2, dadurch gekennzeichnet, dass die Drehungsamplitude des sinus- oder pseudo-sinusförmig bewegten Messkopfes (3) zwischen 0 und 90° liegt, vorzugsweise zwischen 0 und 20°, und dass der Frequenzbereich zwischen 1 mHz und 10 Hz liegt, vorzugsweise zwischen 1 mHz und 1 Hz.

4. Gerät nach einem der Ansprüche 1 bis 3, dadurch gekennzeichnet, dass der Messkopf (3) rotationssymmetrisch ist, beispielsweise die Form eines Zylinders, eines Konus oder eines ebenen Stücks hat.

5. Gerät nach Anspruch 1, dadurch gekennzeichnet, dass der Antrieb (1), der der Achse (2) eine sinusförmige Drehbewegung mitteilt, aus einer kinematischen Kette (11) besteht, die über eine Scheibe (13) von einem Motor (6) gleichförmig gedreht wird, wobei eine Rolle (14) an der Scheibe (13) befestigt ist, die sich um eine zur Drehachse (15) der Scheibe (13) parallele Achse dreht, ferner mit einer Platine (16), einem Schlitten (12), der von der Platine getragen ist, und mit einem am Schlitten (12) befestigten Bauelement (18), das eine rechtwinklige Zahnstange aufweist, an deren einer, rechtwinkligen Kante die Rolle (14) über eine Feder (17) anliegt, wobei ein verzahnter Sektor (19) mit der Zahnstange (18) kämmt und die Achse des Sektors (19) diejenige Achse (2) ist, die den Messkopf (3) trägt.

6. Gerät nach Anspruch 1, dadurch gekennzeichnet, dass der Antrieb (1), der der Achse (2) eine sinusförmige Drehbewegung mitteilt, als gleichförmig angetriebener Motor (6) ausgebildet ist, der auf eine kinematische Kette (11) einwirkt, die einen Tisch (20) aufweist, der zwei sich rechtwinklig kreuzende Bewegungen ausführen kann und zwei bewegliche Teile (20a, 20b) und einen festen Teil (20c) hat, wobei eines der beiden beweglichen Teile eine rechteckige Zahnstange (18) aufweist und einen damit kämmenden verzahnten Sektor (19), wobei die Achse des Sektors (19) diejenige Achse ist, die den Messkopf trägt.

7. Gerät nach Anspruch 1, dadurch gekennzeichnet, dass der Antrieb (1), der der den Messkopf (3) tragenden Achse (2) eine pseudo-sinusförmige Drehbewegung aufzwingt, eine erste und eine zweite Scheibe (21, 22) aufweist, wobei die erste Scheibe (21) von einem Motor (6) gleichförmig gedreht wird und einen Befestigungspunkt (23) für ein Band (24) aufweist, das an einem Befestigungspunkt (25) der zweiten Scheibe (22) befestigt ist, die eine Feder (17B) aufweist, die das Band (24) gespannt hält, wobei die Achse der zweiten Scheibe (22) diejenige Achse ist, die den Messkopf trägt.

8. Gerät nach Anspruch 1, dadurch gekennzeichnet, dass der Antrieb (1), der der den Messkopf (3) tragenden Achse (2) eine sinusförmige Drehbewegung mitteilt, als Motor mit elektronischer Steuerung ausgebildet ist.

9. Anwendung des Geräts nach einem der Ansprüche 1 bis 8 auf die Käseindustrie zur Bestimmung des Abtrennzeitpunktes des Koagulum oder Geronnenem bei der Käseherstellung.

## Claims

1. Apparatus for measuring the rheological properties of semi-solid bodies, comprising essentially a tank (4) containing the body to be tested (5), a measuring head (3) immersed in the tank (4) within the body, means of driving the said head (3) in rotation by means of an axle (2), means (1) of imparting sinusoidal or pseudo-sinusoidal rotational movement to the axle (2), and an angle sensor (8) mounted on the axle (2), characterized in that it also comprises a torque sensor (7) mounted on the axle (2), the torque sensor and the angle sensor both being connected to data-processing means, such as a signal preparation device (9) connected to a microcomputer (10), and in that the torque sensor (7) is a recessed metal piece provided with a plurality of perforations (26) and having at least two branches or webs (27), to which strain gauges (28) are bonded, the said metal piece being deformable in the region of the webs (27).

2. Apparatus according to claim 1, characterized in that the strain gauges (28) are resistive or capacitive strain gauges which are connected in the form of a bridge, in particular in the form of a Wheatstone bridge, so that each bridge branch contains the series of gauges corresponding to the same location on the branches (27) of the sensor (7).

3. Apparatus according to one of claims 1 or 2, characterized in that the amount of rotation of the measuring head (3) driven in a sinusoidal or pseudo-sinusoidal movement is within the range of 0 to ± 90° in particular of 0 to ± 20°, and in that the frequency range is between 1 millihertz and 10 hertz, in particular between 1 mHz and 1 Hz.

4. Apparatus according to any one of claims 1 to 3, characterized in that the measuring head (3) is in the form of a piece which has a symmetry of revolution, such as, for example, a cylinder, a cone or a plane piece.

5. Apparatus according to claim 1, characterized in that the means (1) of imparting a sinusoidal rotational movement to the axle (2) form a kinematic chain (11) comprising a disk (13) driven in continuous rotation by means of a motor (6), a bearing (14) fastened to the disk (13) and rotating about an axis parallel to the axis of rotation (15) of the disk (13), a stage (16), a carriage (12) supported by the said stage (16), an element (18) integral with the carriage (12), this element comprising a straight rack and a straight side, on which the bearing (14) bears by means of a spring (17), and a toothed quadrant (19) engaged with the said rack (18), the axle of this quadrant (19) being the axle (2) carrying the measuring head (3).

6. Apparatus according to claim 1, characterized in that the means (1) of imparting a sinusoidal rotational movement to the axle (2) consist of a motor (6) driven in continuous rotation and actuating a kinematic chain (11) comprising a table (20) executing a double rectilinear intercepting movement and having two movable parts (20a) and (20b) and a fixed part (20c), one of the two movable parts carrying a straight rack (18), a toothed quadrant (19) being engaged with the said rack (18), and the axle of this quadrant (19) being the axle carrying the measuring head.

7. Apparatus according to claim 1, characterized in that the means (1) of imparting a pseudo-sinusoidal rotational movement to the axle (2) carrying the measuring head (3) comprise a first and a second disk (21, 22), the first disk (21) being driven in continuous rotation by means of a motor (6) and being provided with a fastening point (23) for a wire or band (24) which at a fastening point (25) is attached to the second disk (22), the latter having a spring (17B) intended for keeping the wire or band (24) tensioned, and the axle of the second disk (22) being the axle carrying the measuring head.

8. Apparatus according to claim 1, characterized in that the means (1) of imparting a sinusoidal rotational movement to the axle (2) carrying the measuring head (3) consist of a pair of motors and control electronics.

9. Use of the apparatus according to any one of claims 1 to 8 in the cheese-making industry for the purpose of selecting the moment for cutting the cheese coagulant or curds.

FIG.1

FIG.2

FIG.3

FIG.4

FIG.5

17A 18 19 2

FIG.10

43 44 45

FIG.6

6 21 23 24 1 17B 2 8 22 25

FIG.7

FIG.8

FIG.9